(19) Europäisches Patentamt
European Patent Office
Office européen des brevets

(11) EP 0 488 669 B1

(12) **EUROPEAN PATENT SPECIFICATION**

(45) Date of publication and mention
of the grant of the patent:
**07.02.1996 Bulletin 1996/06**

(51) Int Cl.⁶: **H02P 9/10**, H02P 9/42

(21) Application number: **91310913.8**

(22) Date of filing: **27.11.1991**

(54) **Operating control device and method for wound-rotor induction machine**

Vorrichtung und Verfahren zur Regelung einer Induktionsmaschine mit einem bewickelten Läufer

Dispositif et méthode de contrôle opératoire pour machine à induction à rotor bobiné

(84) Designated Contracting States:
**CH DE FR GB LI SE**

(30) Priority: **28.11.1990 JP 328471/90**

(43) Date of publication of application:
**03.06.1992 Bulletin 1992/23**

(73) Proprietor: **KABUSHIKI KAISHA TOSHIBA
Kawasaki-shi, Kanagawa-ken 210, Tokyo (JP)**

(72) Inventor: **Shimamura, Takeo,
c/o Intellectual Property Div.
Tokyo 105 (JP)**

(74) Representative: **Kirk, Geoffrey Thomas
London EC1R 0DS (GB)**

(56) References cited:
**EP-A- 0 253 294**

• **PATENT ABSTRACTS OF JAPAN vol. 14, no. 457 (E-98) 2 October 1990 & JP-A-2 184 292**
• **PATENT ABSTRACTS OF JAPAN vol. 15, no. 269 (E-108) 9 July 1991 & JP-A-3 089 967**
• **PATENT ABSTRACTS OF JAPAN vol. 11, no. 280 (E-539)(2727) 10 September 1987 & JP-A-62 077 871**

## Description

This invention relates to a system for controlling the operation of a winding type induction machine.

EP-A2-0253 294 discloses a system to control the secondary current of the wound-rotor induction machine using a frequency converter to effect a control such that the frequency of the primary side is kept constant even if the rotation speed changes, which is so called the "secondary excitation system". Because this system advantageously permits the capacity of the converter to be reduced, it is especially suitable for large capacity power generation plant.

The invention relates in particular to a system where the machine is operated with secondary excitation control of the secondary current performed by a PWM controller inverter.

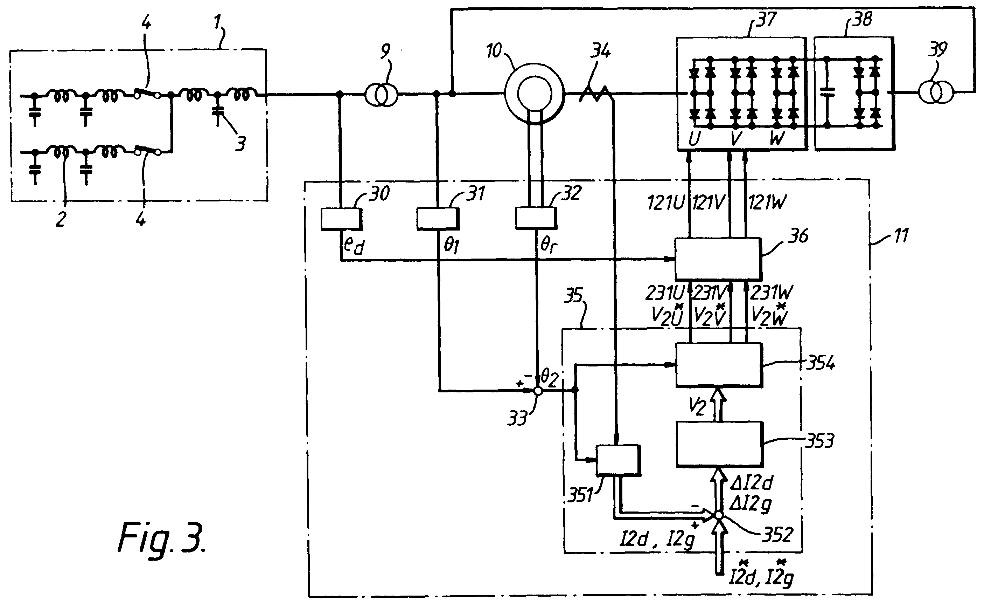

For example, in modern hydro-electric power stations, the need has increased for a so-called variable-speed power generating system, where the induction machine is operated at the rotational speed at which the turbine efficiency is a maximum with respect to head changes or load changes. In a hydro-electric generator plant with such a variable speed power generation system, a winding type induction machine is operated at variable speed. Such a system for winding type induction machine is disclosed in the literature: for example, the system disclosed in paragraph 96, Fig. 3.2.11 of Collected Research Theses BMFT-FB T84-154 (1) of the West German Bundesministerium fuer Forschung und Technologie. The system disclosed in this reference is known as a secondary excitation type variable speed power generating system, in which the primary side frequency is controlled to a constant irrespective of changes in rotational speed, by controlling the secondary current of the winding type induction machine using a frequency converter such as a cyclo converter or PWM controlled inverter. This system has the characteristic advantage that the capacity of the converter can be made small, so it can be applied in particular to large-capacity generating plants.

A generating plant is operated as part of a complex transmission system. In this transmission system, the transmission line has inductance, resistance and stray capacitance distributed along it. Shunt reactors and phase-advance capacitors are provided to improve the power factor. The impedance when the transmission system side is seen from the generating plant therefore has a frequency characteristic. Furthermore, when the transmission system is employed it is switched in a complex manner in response to power flow conditions, so this impedance characteristic is not fixed, but varies.

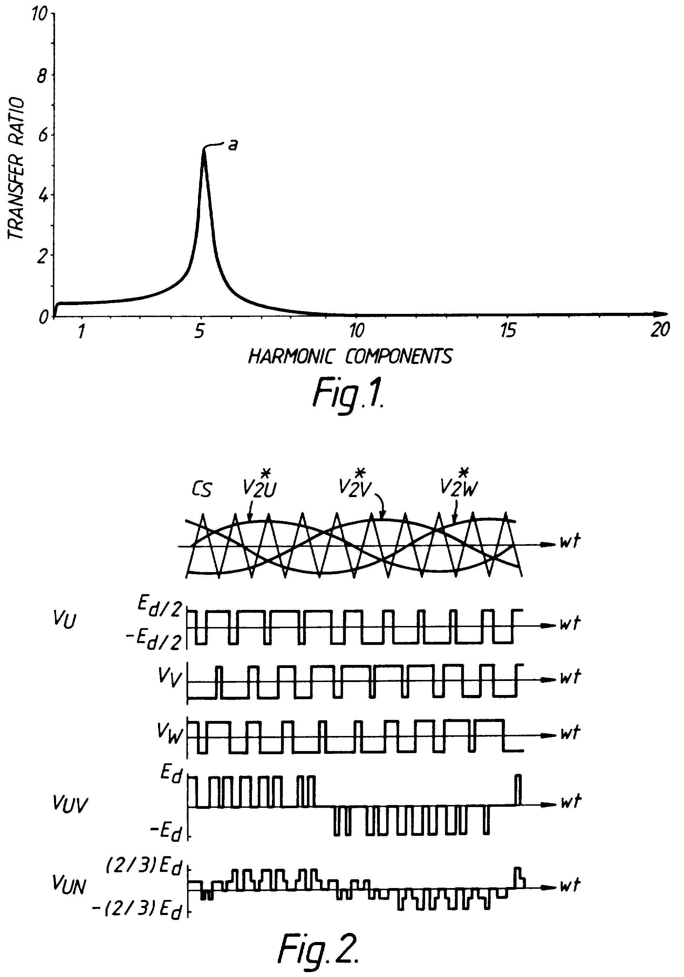

Fig. 1 is a view showing an example of how harmonic components, if such are present in the primary voltage of the induction machine, are transmitted to the output side of the generating plant, i.e. to the transmission system, when the generating plant is being switched into the transmission system.

Fig. 1 shows an example characteristic in which, due to the impedance characteristic of the transmission system, harmonic components present in the primary voltage of the induction machine are amplified with a peak as indicated by point a. This point is called the "antiresonance point" possessed by the transmission system. In a transmission system having such a characteristic, if the primary voltage of the induction machine were to contain even a slight harmonic component coinciding with point a, because of the antiresonance point, this component would be amplified, producing extreme distortion at the output voltage end of the generating plant. It is undesirable to operate the induction machine in such a condition of large voltage distortion, so this situation must be avoided.

The harmonic components contained in the primary voltage of the induction machine are practically proportional to the harmonic components contained in the secondary excitation voltage of the induction machine. If a PWM controlled inverter is used in the frequency converter for secondary excitation, the output voltage waveform of this inverter contains harmonic components, so these harmonic components have an effect on the harmonic components of the primary voltage of the induction machine.

Fig. 2 is a characteristic showing an example of a typical output voltage waveform of a three phase PWM controlled inverter for secondary excitation. In Fig. 2, v2u*, v2v*, and v2w* are voltage commands to the inverter, whose output frequency is $f_O$. $e_S$ is a modulation triangular wave for PWM control, whose repetition frequency i.e. modulation frequency is $f_S$. Switching elements constituting the inverter are controlled by comparing these voltage commands v2u*, v2v* and v2w* with modulation triangular wave $e_S$, whereupon the fundamental frequency of the output voltage of the inverter is determined by the frequency $f_O$ of the voltage commands and a typical PWM controlled inverter output voltage is obtained in which the repetition frequency of a pulse train that changes in square-wave fashion is determined by the frequency $f_S$ of the modulation triangular wave.

The harmonic components contained in this PWM controlled inverter output voltage vuv are expressed by the following equations, taking the frequency of the modulation triangular wave $e_S$ as $f_S$ and the frequency of the voltage commands v2u*, v2v* and v2w* as $f_O$:

$$f_H = n\,f_S \pm k\,f_O$$

where n is an integer, 0 to $\infty$
and k is an integer, 0 to $\infty$

As is clear for the above equation, the harmonic components contained in this PWM controlled inverter output voltage change depending on both the frequency $f_O$ of the voltage commands and the frequency $f_S$ of the modulation triangular wave. In operation of an ordinary PWM controlled inverter, the frequency $f_S$ of the modulation triangular wave is fixed at a constant value, but the output frequency $f_O$ changes over a wide range, so the harmonic components of the output voltage of the inverter change in a complex manner. Consequently, even in a variable speed generating system, the harmonic components contained in the output voltage change in a complex manner because the frequency of the PWM controlled inverter, which constitutes the secondary excitation power source, is controlled in a manner matching the rotational speed of the induction machine.

Accordingly, in the variable speed generating system employing a PWM controlled inverter, in the variable speed range, the modulation frequency $f_S$ of the secondary excitation voltage is determined such that no harmonic component corresponding to antiresonance point $a$ of Fig. 1 is contained in the primary voltage of the induction machine. However, due to demands imposed in use of the transmission system, when operation is performed with the transmission system being switched over, the impedance characteristic of the transmission system changes, causing the antiresonance point to be displaced. This may result in harmonics contained in the primary voltage of the induction machine coinciding with the antiresonance point. In such cases, the distortion of the primary voltage of the induction machine is enormously increased. This may make it impossible to continue operation.

In this respect, in the system disclosed in the literature reference described above, voltage distortion of the primary voltage of the induction machine is not discussed, and, even when the transmission system is being switched over because of power system requirements, no measures are taken to ensure a stable induction machine primary voltage with little distortion. Development of an operating control device for a winding type induction machine wherein control is performed to make the primary voltage of the induction machine stable with little distortion even when the transmission system is being switched over because of power transmission requirements is now tnerefore being urgently called for.

An object of the invention is to provide an operating control system for a winding type induction machine wherein operation can be arranged such as to give a stable voltage with little distortion even when the impedance characteristic of the transmission line to which it is connected is changing in a complex manner.

According to a first aspect of the invention a system for controlling the operation of a winding type induction machine which is connected to an electrical transmission line comprises a PWM controlled inverter for secondary current excitation control of the machine; primary voltage phase detection means for detecting a phase of said primary voltage of said machine and producing a signal representing said phase; phase detection means for detecting a rotational phase of the rotor winding of said machine and producing a signal representing said rotational phase; secondary voltage phase determining means for determining a phase of a secondary voltage of said machine responsive to said detected primary voltage phase and said detected rotational phase and producing a signal representing said secondary voltage phase; secondary current control means for producing command signals for said PWM controlled inverter responsive to the secondary current of said machine, a current command value and said secondary voltage phase; and gate control means responsive to said command signals from said secondary current control means; and means providing either a signal representing distortion of the primary voltage of the machine or a transmission changeover signal for outputting to said PWM controlled inverter gate control signals for performing PWM control, by modulating said command signals with a triangular wave of modulation frequency responsive to either said voltage distortion signal or the transmission system changeover signal.

According to a second aspect of the invention, a method of controlling the operation of a winding type induction machine which is connected to an electrical transmission line and the secondary current excitation is by way of a PWM controlled inverter comprises the steps of detecting a phase of the primary voltage of said winding type induction machine and producing a signal representing said phase; detecting a rotational phase of a rotor of said induction machine and producing a signal representing said rotational phase; determining a phase of a secondary voltage of said machine using said detected primary voltage phase and said detected rotational phase and producing a signal representing said secondary voltage phase; producing voltage command signals for said inverter using the secondary current of the machine, a current command value and said determined secondary voltage phase; and generating gate control signals for said PWM controlled inverter to perform PWM control by modulating said voltage command signals with a triangular wave of modulation frequency which is either responsive to the voltage distortion of the primary voltage or is predetermined in accordance with a transmission system changeover signal.

In order that the invention may be more readily understood, it will now be described, by way of example only, with reference to the accompanying drawings, in which:-

Figure 1 is a characteristic given in explanation of the frequency characteristic possessed by a transmission system;
Figure 2 is a diagram given in explanation of the operation of a PWM controlled inverter;
Figure 3 is a block diagram showing an embodiment of an operating control device for a winding type induction machine according to this invention;
Figure 4 is a block diagram showing an example basic layout of gate control means of this invention;
Figure 4A is a graph showing the characteristics of the function generator; and
Figure 5 is a block diagram showing another example basic layout of gate control means of this invention;

Figure 3 shows an embodiment of an operating control system for a winding type induction machine according to this invention. In Figure 3, a winding type induction machine 10 is connected to a transmission line 1 by a main transformer 9. Inductance 2 and stray capacitance 3 are distributed on power system 1 and the system layout is altered by opening and closing a circuit breaker 4.

An operation control system 11 of this invention controls the operation of the induction machine 10. In more detail, conversion of the D.C. voltage of a D.C. power source 38 to a prescribed secondary voltage is performed by the gate control of a PWM controlled inverter 37. This controls the magnitude and frequency of the secondary voltage of induction machine 10 to a constant.

The phase $\theta_1$ of the primary voltage of winding type induction machine 10 is detected by a primary voltage phase detection means 31. The rotational phase $\theta_r$ of the rotor of induction machine 10 is detected by a rotational phase detection means 32.

The deviation between primary voltage phase $\theta_1$ detected by voltage phase detection means 31 and rotational phase $\theta_r$ detected by rotational phase detection means 32, i.e., secondary voltage phase $\theta_2$ is obtained by a secondary voltage phase determining means 33. This secondary voltage phase $\theta_2$ indicates the frequency of the secondary voltage of the machine 10.

Secondary voltage phase $\theta_2$ obtained by this secondary voltage phase determining means 33 is input into a three-phase to two-phase converter 351 and a voltage command generating means 354 of a secondary current control means 35.

Three-phase to two-phase converter 351 converts the three-phase secondary current of the induction machine detected by a current detection means 34 to a two-phase secondary current consisting of active component $I_2d$ and reactive component $I_2q$. Secondary voltage phase $\theta_2$ obtained by secondary voltage phase determining means 33 is used as a parameter in this conversion.

The active component $I_2d$ and reactive component $I_2q$ of the secondary current are input to comparison means 352, where they are compared with predetermined current command values $I^*_2d$ and $I^*_2q$. The active component deviation $\Delta I_2d$ and reactive component deviation $\Delta I_2q$, respectively, are thus obtained.

Active component deviation $\Delta I_2d$ and reactive component deviation $\Delta I_2q$ of the secondary current are then input to a calculation means 353 which converts them into the corresponding active component deviation $\Delta V_2d$ and reactive component deviation $\Delta V_2q$ of the secondary voltage.

Active component deviation $\Delta V_2d$ and reactive component deviation $\Delta V_2q$ of the secondary voltage are then input to voltage command generating means 354, where they are converted into three phase voltage commands $V^*_2U$, $V^*_2V$ and $V^*_2W$. The frequency of voltage commands $V^*_2U$, $V^*_2V$ and $V^*_2W$ is determined by using secondary voltage phase $\theta_2$ calculated by secondary

voltage phase determining means 33 as a calculation parameter in the conversion.

Voltage commands $V^*_2U$, $V^*_2V$ and $V^*_2W$ from voltage command generating means 354 are input to a gate control means 36. Gate control means 36 also inputs a signal $e_d$ indicating the degree of voltage distortion from a primary voltage distortion detection means 30 of induction machine 10.

The voltage distortion $e_d$ is mainly effected by the higher harmonic components at the antiresonant frequency of the transmission line (shown in Figure 1). Other higher harmonic components may be contained but have only slight effect on voltage distortion $e_d$. The value $e_d$ is derived as follows:

$$e_d = \sqrt{\frac{|V|^2 - |V_1|^2}{|V_1|^2}}$$

where: $V = V_1\sin\omega t + V_2\sin 2\omega t + ... + Vn\sin n\omega t$
(with $V_2...V_n$ terms being harmonic components)
$V_1 = V_1 \sin\omega t$

$$|V|^2 = |V_1|^2 + |V_2|^2 + ... + |Vn|^2$$

$$|V_1|^2 = |V_1|^2$$

$e_d$:  Voltage distortion
$V$:  transmission line voltage
$V_1$:  fundamental wave component of transmission line voltage

The detector 30, for example, can be implemented using the Hewlett Packard HP4195A.

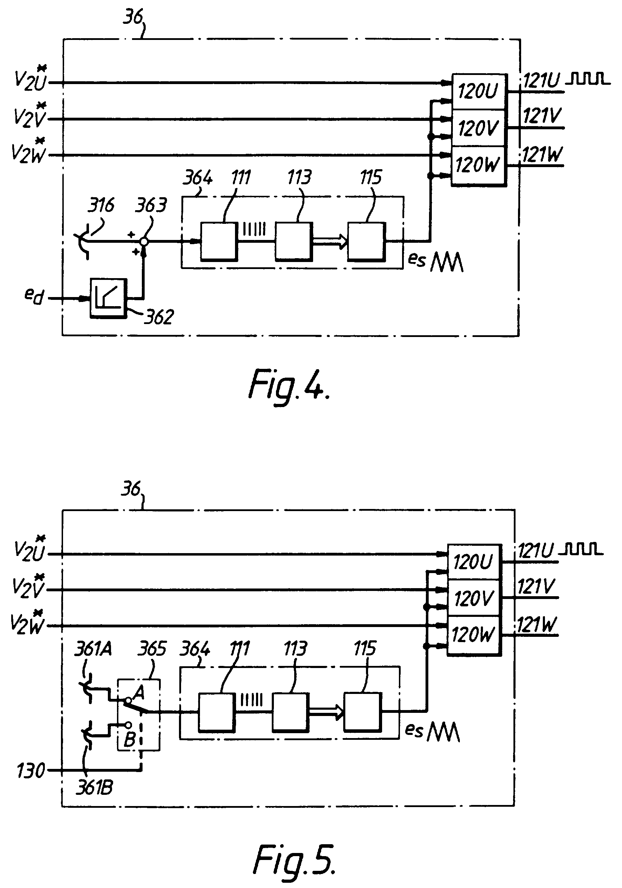

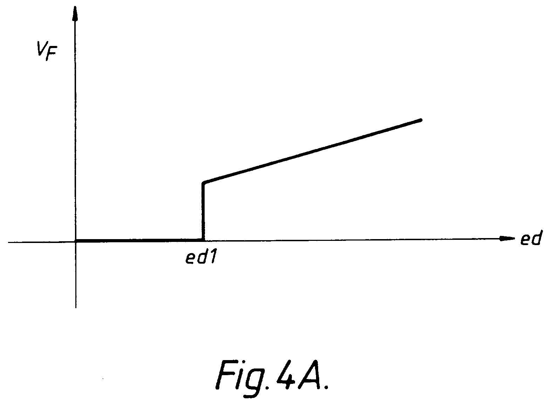

When gate control means 36 inputs voltage commands v2u*, v2v* and v2w* from the voltage command generating means of current control means 35 and voltage distortion signal $e_d$ from voltage distortion detection means 30, if the magnitude of voltage distortion signal $e_d$ is within a range less than a prescribed value ($e_d2$), it carries out PWM control with the modulation triangular wave of pre-set modulation frequency $f_s$. If voltage distortion signal $e_d$ is greater than the prescribed value $e_d1$, it carries out PWM control with modulation frequency $f_S$ changed from its pre-set value by an amount responsive to the magnitude of voltage distortion signal $e_d$. An example of the detailed layout of this gate control means 36 is shown in the block diagram of Fig. 4.

Gate control means 36 consists of a modulation frequency setting means 361 that sets modulation frequency $f_S$ of PWM controlled inverter 37, a function generating means 362 that inputs the output signal $e_d$ from voltage distortion detection means 30, a calculating means 363 that adds the output signal from modulation frequency setting means 361 and the output signal from function generating means 362, a triangular wave generating means 364 that outputs triangular wave $e_S$ of prescribed modulation frequency $f_S$ based on the output signal from this calculating means 363, and comparison means 120U, 120V, and 120W that output gate signals 121U, 121V, and 121W to PWM controlled inverter 37 by comparing voltage e commands V*2U, V*2V and V*2W from voltage command generating means 354 with triangular wave $e_S$ from this triangular generating means 364.

The characteristic of function generator 362 is shown in Figure 4A. $V_F$, output to calculation means 363, is θ until the $e_d$ threshold e, is reached. This is where the magnitude of the distortion $e_d$ is greater than the prescribed value.

Triangular wave generating means 364 consists of a pulse generator 111 that generates pulses corresponding to the magnitude of the output signal from calculation means 363, a counter 113 that counts the number of pulses from this pulse generator 11 and a triangular wave generator 115 that changes the modulation frequency $f_S$ in accordance with the number of pulses counted by counter 113.

Let us now assume that the distortion of the primary voltage of induction machine 10 is detected by voltage distortion detection means 30. When this happens, a voltage distortion signal $e_d$ proportional to this voltage distortion is input to function generating means 362 of gate control means 36.

Modulation frequency $f_{SO}$ for PWM control of the fixed frequency with which PWM controlled inverter 37 ought to be operated is set in modulation frequency setting means 361 of gate control means 36. However, the function which is set in function generating means 362 is as follows. Specifically, if voltage distortion signal $e_d$ is less than the prescribed value, its output signal is set to zero. If voltage distortion signaled is greater than the prescribed value, its output signal is set to a value proportional to voltage distortion signal $e_d$. Therefore, if voltage distortion signal $e_d$ is greater than the prescribed value, triangular wave generating means 364 outputs a modulation triangular wave $e_S$ of modulation frequency $f_S$ proportional to the output signal of calculation means 363.

The gate signals for PWM control are produced by comparison of this modulation triangular wave $e_S$ with voltage command signals V*2U, V*2V, and V*2W performed by comparison means 120U, 120V, and 120W.

Thus, the content of harmonic components in the primary voltage having an antiresonance characteristic of the transmission system can be reduced by changing the gate signal in accordance with the voltage distortion.

In the operating control device of this embodiment, when the magnitude of the voltage distortion of the primary voltage of induction machine 10 exceeds a prescribed value, the frequency $f_S$ of modulation triangular wave $e_S$ is adjusted in accordance with the magnitude of this voltage distortion. The voltage distortion of the primary voltage of winding type induction machine 10 can therefore be reduced by changing the harmonic frequency components contained in the output voltage of PWM controlled inverter 37. That is, even when the generating plant is switched into a power system wherein a transmission system having an antiresonance characteristic is being switched over in a complex way, operation with small distortion can always be achieved.

Fig. 5 is a block diagram showing another embodiment of gate control means 36. Parts which are the same as in Fig. 4 are given the same reference numerals.

In general, stable operation of a power system is sought to be achieved by suitable switching over of the transmission system performed by monitoring the power flow on the transmission system at a power command center. Thus, the power command center always has under control how the power system is being switched and operated. The switching condition of the transmission system can therefore be advised to every generating plant that is being switched into the power system.

Fig. 5 shows an example layout of gate control means 36 when a generating plant having a winding type induction machine is employed in such a power system. In Fig. 5, reference numeral 130 indicates a transmission system switching signal that is supplied from the power command center; 361A indicates a first modulation frequency setting means; 361B indicates a second modulation frequency setting means; and 365 indicates a switching means that appropriately changes over between the outputs of first and second modulation frequency setting means 361A and 361B in response to transmission line switching signal 130 and delivers the selected output as input to triangular wave generating means 364.

In a gate control means 36 constructed as above, before the transmission line is changed over, changeover switch 365 is changed over to the A side. Power distortion can then be reduced by ensuring that no harmonic component of the primary voltage of induction machine 10 coincides with the antiresonance point of the transmission system, by controlling PWM controlled inverter 37 with modulation frequency $f_{S1}$ that is set by first modulation frequency setting means 361A. Next, if the transmission system is changed over, transmission line switching signal 130 is input and changeover means 365 is actuated, causing changeover means 365 to be changed over to side B. PWM controlled inverter 37 is then controlled with modulation frequency $f_{S2}$ that is set by second modulation frequency $f_{S2}$ of second modulation frequency setting means 361B is set such that no harmonic component of the primary voltage of induction machine 10 coincides with the antiresonance point of the power system, taking into account the transmission system characteristics after the previous switching over of the transmission line. Operation can therefore be continued with little voltage distortion even after switching over of the transmission system. It is also possible to reduce device costs since the voltage distortion detection means 30 of Fig. 3 can be eliminated by using the gate control means 36 of Fig. 5.

As described above, with this invention, the voltage distortion of the primary voltage of a winding type induction machine can be reduced by changing the content of harmonic components of the output voltage of the PWM controlled inverter. This is done by adjusting the modulation frequency that determines the ON/OFF periods of the switching elements of the PWM controlled inverter in response to the magnitude of the voltage distortion, if the detected value of such voltage distortion in the primary voltage of the winding type induction machine exceeds a prescribed value. A stable primary voltage with little voltage distortion can therefore be achieved even when the impedance characteristic of the transmission line is changing in a complex manner due to changeover of the transmission system etc. Hence an operating control device for a winding type induction machine can be provided which is of very high reliability.

## Claims

1. A system for controlling the operation of a winding type induction machine which is connected to an electrical transmission line, said system comprising:

   a PWM controlled inverter (37) for secondary current excitation control of the machine;
   primary voltage phase detection means (31) for detecting a phase of said primary voltage of said machine and producing a signal ($\theta_1$) representing said phase;
   phase detection means (32) for detecting a rotational phase of the rotor winding of said machine and producing a signal ($\theta_r$) representing said rotational phase;
   secondary voltage phase determining means (33) for determining a phase of a secondary voltage of said machine responsive to said detected primary voltage phase ($\theta_1$) and said detected rotational phase ($\theta_r$) and producing a signal ($\theta_2$) representing said secondary voltage phase;
   secondary current control means (35) for producing command signals for said PWM controlled inverter (37) responsive to the secondary current of said machine, a current command value and said secondary voltage phase; and
   gate control means (36) responsive to said command signals from said secondary current control means; characterized by
   means providing either a signal ($e_d$) representing distortion of the primary voltage of the machine or a transmission changeover signal for outputting to said PWM controlled inverter (37) gate control signals for performing PWM control, by modulating said command signals with a triangular wave of modulation frequency responsive to either said voltage distortion signal or the transmission system changeover signal.

2. A system as claimed in claim 1, wherein said secondary current control means (35) produces said command signals such that the frequency of said secondary current is the frequency determined by said secondary voltage phase determining means (33) and a value of said secondary current constitutes said current command value.

3. A system as claimed in claim 1 or 2, wherein said gate control means (36) outputs to said PWM controlled inverter a gate control signal for performing PWM control wherein, if the magnitude of the voltage distortion signal ($e_d$) is less than a predetermined value, said voltage command signal is modulated with a triangular wave of predetermined modulation frequency, but, if the magnitude of said voltage distortion ($e_d$) signal exceeds said predetermined value, said voltage command signal is modulated with a triangular wave of modulation frequency responsive to the magnitude of said voltage distortion signal ($e_d$).

4. A system as claimed in claim 1, wherein the signal ($e_d$) representing distortion of the primary voltage is obtained from voltage distortion detection means (30).

5. A system as claimed in claim 1, wherein said secondary current control means (35) calculates said voltage command signals such that frequency of said secondary current is a frequency calculated by said secondary voltage phase determining means (33) and value of said secondary current is said current command value.

6. A method of controlling the operation of a winding type induction machine which is connected to an electrical transmission line and the secondary current excitation is by way of a PWM controlled inverter comprising the steps of:

   detecting a phase of the primary voltage of said winding type induction machine and producing a signal representing said phase;
   detecting a rotational phase of a rotor of said induction machine and producing a signal representing said rotational phase;
   determining a phase of a secondary voltage of said machine using said detected primary voltage phase and said detected rotational phase and producing a signal representing said secondary voltage phase;
   producing voltage command signals for said inverter using the secondary current of the machine, a current command value and said determined secondary voltage phase; characterized by
   generating gate control signals for said PWM controlled inverter to perform PWM control by modulating said voltage command signals with a triangular wave of modulation frequency which is either responsive to the voltage distortion of the primary voltage or is predetermined in accordance with a transmission system changeover signal.

**Patentansprüche**

1. System zur Steuerung des Betriebs einer Induktionsmaschine vom Wicklungstyp, die an eine elektrische Übertragungsleitung angeschlossen ist, wobei das System aufweist:

   einen PWM-Inverter (37) zur sekundärstrom-Anregungssteuerung der Maschine;
   eine Primärspannungs-Phasenerkennungseinrichtung (31) zur Erkennung einer Phase der Primärspannung der Maschine und zur Erzeugung eines Signals ($\theta_1$), das die Phase darstellt;
   eine Phasenerkennungseinrichtung (32) zur Erkennung einer Drehphase der Rotorwicklung der Maschine und zur Erzeugung eines Signals ($\theta_r$), das die Drehphase darstellt;
   einer Sekundärspannungs-Phasenerkennungseinrichtung (33) zur Bestimmung einer Phase der Sekundärspannung der Maschine in Abhängigkeit von der ermittelten Primärspannungsphase ($\theta_1$) und der ermittelten Drehphase ($\theta_r$) und zur Erzeugung eines Signals ($\theta_2$), das die Sekundärspannungsphase darstellt;
   einer Sekundärstrom-Steuereinrichtung (35) zur Erzeugung eines Steuersignals für den PWM-gesteuerten Inverter (37) in Abhängigkeit von dem Sekundärstrom der Maschine, einem Strombefehlswert und der Sekundärspannungsphase; und mit
   einem Gate-Steuermittel (36), das auf die Befehlssignale von den Sekundärstrom-Steuermitteln anspricht;
   **gekennzeichnet durch**
   Mittel, die entweder ein Signal ($e_d$), das die Verzerrung der Primärspannung der Maschine darstellt, oder ein Übertragungsumschaltsignal zum Ausgeben von Gate-Steuersignalen an den PWM-gesteuerten Inverter (37) zur Durchführung der PWM-Steuerung, durch Modulieren der Befehlssignale mit einer Dreieckswelle der Modulationsfrequenz, die entweder dem Spannungsverzerrungssignal oder dem Übertragungssystem-Umschaltsignal entspricht.

2. System nach Anspruch 1, wobei die Sekundärstrom-Steuereinrichtung (35) die Befehlssignale in der Weise erzeugt, daß die Frequenz des Sekundärstroms die von der Sekundärspannungs-Phasenerkennungseinrichtung (33) ermittelte Frequenz ist und wobei ein Wert des Sekundärstroms den Strombefehlswert bildet.

3. System nach Anspruch 1 oder 2, wobei das Gate-Steuermittel (36) an den PWM-gesteuerten Inverter ein Gate-Steuersignal ausgibt, um eine PWM-Steuerung durchzuführen, wobei dann, wenn die Größe des Spannungsverzerrungssignals ($e_d$) kleiner als ein vorgegebener Wert ist, das Spannungsbefehlssignal mit einer Dreieckswelle von vorgegebener Modulationsfrequenz moduliert wird, aber dann, wenn die Größe des Spannungsverzerrungssignals ($e_d$) den vorgegebenen Wert überschreitet, das Spannungsbefehlssignal mit einer Dreieckswelle der Modulationsfrequenz moduliert wird, das der Größe des Spannungsverzerrungssignals ($e_d$) entspricht.

4. System nach Anspruch 1, wobei das Signal ($e_d$), das die Verzerrung der Primärspannung darstellt, von der Spannungsverzerrungs-Erkennungseinrichtung (30) erhalten wird.

5. System nach Anspruch 1, wobei die Sekundärstrom-Steuereinrichtung (35) die Spannungsbefehlssignale in der Weise berechnet, daß die Frequenz des Sekundärstroms eine Frequenz ist, die durch die Sekundärspannungs-Phasenerkennungseinrichtung (33) berechnet ist und der Wert des Sekundärstroms der Strombefehlswert ist.

6. Verfahren zum Steuern des Betriebs einer Induktionsmaschine vom Wicklungstyp, die an eine elektrische Übertragungsleitung angeschlossen wird und bei der die Sekundärstromerregung durch einen PWM-gesteuerten Inverter erfolgt, mit den Schritten:

   Erkennen einer Phase der Primärspannung der Wicklungstyp-Induktionsmaschine und Erzeugen eines Signals, das die Phase darstellt;
   Erkennen einer Drehphase eines Rotors der Induktionsmaschine und Erzeugen eines Signals, das die Rotationsphase darstellt;
   Ermitteln einer Phase einer Sekundärspannung der Maschine unter Verwendung der erkannten Primärspannungsphase und der erkannten Drehphase und Erzeugen eines Signals, das die Sekundärspannungsphase darstellt;
   Erzeugen von Spannungsbefehlssignalen für den Inverter unter Verwendung des Sekundärstroms der Maschine, eines Strombefehlswerts und der ermittelten Sekundärspannungsphase;
   **dadurch gekennzeichnet**,
   daß Gate-Steuersignale für den PWM-gesteuerten Inverter
   erzeugt werden, um eine PWM-Steuerung durch Modulieren der Spannungsbefehlssignale mit einer Dreieckswelle der Modulationsfrequenz durchzuführen, die entweder von der Spannungsverzerrung der Primärspannung abhängt oder in Abhängigkeit von einem Übertragungssystem-Umschaltsignal vorgegeben wird.

## Revendications

1. Système de contrôle opératoire d'une machine à induction du type à rotor bobiné qui est connectée à une ligne de transmission électrique, ledit système comprenant:

un onduleur (37) commandé par PWM (modulation par. largeur d'impulsion) pour le contrôle d'excitation par le courant secondaire de la machine ;
un moyen (31) de détection de la phase de la tension primaire pour détecter une phase de ladite tension primaire de ladite machine et produire un- signal ($\theta_1$) représentant ladite phase ;
un moyen détecteur de phase (32) pour détecter une phase de rotation du rotor de ladite machine et former un signal ($\theta_r$) représentant ladite phase de rotation ;
un moyen de détermination de la phase de la tension secondaire (33) pour déterminer une phase d'une tension secondaire de ladite machine en réponse à ladite phase détectée de la tension primaire ($\theta_1$) et à ladite phase de rotation détectée ($\theta_r$) et formant un signal ($\theta_2$) représentant ladite phase de la tension secondaire ;
un moyen de commande par le courant secondaire (35) pour former des signaux de commande destinés audit onduleur (37) commandé par PWM en réponse au courant secondaire de ladite machine, à une valeur de commande du courant et ladite phase de la tension secondaire ; et
un moyen de commande de gâchette (36) répondant auxdits signaux de commande provenant dudit moyen de commande par le courant secondaire, caractérisé par
un moyen délivrant soit un signal ($e_d$) représentant la distorsion de la tension primaire de la machine soit un signal de changement de transmission pour délivrer audit onduleur, commandé par PWM (37), des signaux de commande de gâchette pour effectuer la commande par PWM, en modulant lesdits signaux de commande par une onde triangulaire de fréquence de modulation répondant soit audit signal de distorsion de tension soit au signal de changement du système de transmission.

2. Système selon la revendication 1, dans lequel ledit moyen de commande par courant secondaire (35) produit lesdits signaux de commande, de façon que la fréquence dudit courant secondaire soit la fréquence déterminée par ledit moyen de détermination de la phase de la tension secondaire (33) et qu'une valeur dudit courant secondaire constitue ladite valeur de commande du courant.

3. Système selon l'une des revendication 1 ou 2, dans lequel ledit moyen de commande de gâchette (36) délivre audit onduleur commandé par PWM un signal de commande pour exécuter la commande par PWM dans lequel, si l'amplitude du signal de distorsion de tension ($e_d$) est inférieure à une valeur prédéterminée, ledit signal de commande de tension est modulé par une onde triangulaire ayant la fréquence de modulation prédéterminée, mais, si l'amplitude dudit signal de distorsion de tension ($e_d$) dépasse ladite valeur prédéterminée , ledit signal de commande de tension est modulé par une onde triangulaire dont la fréquence de modulation répond à l'amplitude dudit signal de distorsion de tension ($e_d$).

4. Système selon la revendication 1, dans lequel le signal ($e_d$), représentant la distorsion de la tension primaire, est obtenu à partir du moyen de détection de la distorsion de tension (30).

5. Système selon la revendication 1, dans lequel ledit moyen de commande par courant secondaire (35) calcule lesdits signaux de commande de tension, de manière que la fréquence dudit courant secondaire soit calculée par ledit moyen de détermination de la phase de la tension secondaire (33), et que la valeur dudit courant secondaire soit ladite valeur de commande du courant.

6. Procédé de commande opératoire d'une machine à induction du type à rotor bobiné qui est reliée à une ligne de transmission électrique et dans lequel l'excitation par le courant secondaire se fait en passant par un onduleur commandé par PWM comprenant les étapes suivantes :

détecter une phase de la tension primaire de ladite machine à induction du type à rotor bobiné et former un signal représentant ladite phase ;
détecter une phase de rotation d'un rotor de ladite machine à induction et produire un signal représentant ladite phase de rotation ;
déterminer une phase de la tension secondaire de ladite machine en utilisant ladite phase détectée de la tension primaire et ladite phase de rotation détectée, et en produisant un signal représentant ladite phase de la tension secondaire ;

produire des signaux de commande de tension pour ledit onduleur en utilisant le courant secondaire de la machine, une valeur de commande du courant et ladite phase de la tension secondaire prédéterminée ; caractérisé par la formation de signaux de commande de gâchette pour ledit onduleur commandé par PWM afin d'effectuer une commande par PWM au moyen d'une modulation desdits signaux de commande de tension par une onde triangulaire à la fréquence de modulation qui répons soit à la distorsion de fréquence de la tension primaire soit est prédéterminée en fonction d'un signal de changement du système de transmission.

Fig.1.

Fig.2.

Fig. 3.

EP 0 488 669 B1

**Fig.4.**

**Fig.5.**

*Fig. 4A.*